# EUROPÄISCHE PATENTANMELDUNG

(11) **EP 1 531 392 A1**
(43) Veröffentlichungstag der Anmeldung: **18.05.2005**
(21) Anmeldenummer: 04010198.2
(22) Anmeldetag: 29.04.2004
(51) Int. Cl.: G06F 9/455, G05B 19/042

(54) **Verfahren zum Steuern und/oder Regeln wenigstens einer Komponente in einem technischen System und/oder in einem technischen Prozess sowie technisches System**

(30) Priorität: 31.10.2003 DE 10351019
(71) Anmelder: P21 - Power for the 21st Century GmbH, 85649 Brunnthal (DE)
(72) Erfinder: Wolters, Ralf, 83137 Schonstett (DE); Goldner, Robert, 81371 München (DE)
(74) Vertreter: Müller, Thomas, Dipl.-Ing.

(57) **Zusammenfassung**

Es wird ein Verfahren zum Steuern und/oder Regeln wenigstens einer Komponente (11) in einem technischen System (10) und/oder in einem technischen Prozess beschrieben. Weiterhin wird ein entsprechendes technisches System (10) beschrieben. Das Verfahren ist erfindungsgemäß durch folgende Schritte gekennzeichnet:
a) in einer Rechner-Betriebssystemumgebung (21) ist ein Steuerprogramm (22) zum Steuern und/oder Regeln von zumindest einem Teil der wenigstens einen Komponente (11) eingebunden;
b) das Steuerprogramm (22) wirkt in der Rechner-Betriebssystemumgebung (21) mit einem Emulationsprogramm (23) zusammen, welches gegenüber dem Steuerprogramm (22) eine Rechnerumgebung simuliert;
c) das Emulationsprogramm (23) simuliert weiterhin eine Schnittstelle (24) zu einem Bearbeitungsprogramm (25), welches elektronisch eine geeignete Verbindungsschnittstelle (26) zwischen dem Steuerprogramm (22) und der wenigstens einen Komponente (11) erzeugt;
d) über die Verbindungsschnittstelle (26) findet zwischen dem Steuerprogramm (22) und der wenigstens einen Komponente (11) zum Zwecke des Steuerns und/oder Regelns unidirektional oder bidirektional ein Datenaustausch statt.

## Beschreibung

Die vorliegende Erfindung betrifft ein Verfahren zum Steuern und/oder Regeln wenigstens einer Komponente in einem technischen System beziehungsweise in einem technischen Prozess. Weiterhin betrifft die Erfindung ein technisches System.

Technische Systeme zeichnen sich in der Regel dadurch aus, dass sie über diverse Komponenten verfügen. Technische Prozesse laufen in der Regel unter Zuhilfenahme wenigstens einer Komponente ab. Als Komponente kann im Lichte der vorliegenden Beschreibung generell ein Bauelement oder Bestandteil eines technischen Systems, beziehungsweise ein Bauelement oder Bestandteil, mit dessen Hilfe ein technischer Prozess abläuft, verstanden werden. Die Komponenten können durchaus auch räumlich voneinander getrennt sein.. Die Komponenten müssen je nach Bedarf im System oftmals geregelt und/oder gesteuert werden.

Sind die Eigenschaften des technischen Systems beziehungsweise des technischen Prozesses bekannt und darf der Einfluss von Störgrößen auf die Ausgangsgrößen des technischen Systems beziehungsweise Prozesses vernachlässigt werden oder gibt es eine dominierende und messbare Störgröße, sodass deren Wirkung in einer Steuervorschrift berücksichtigt werden kann, dann wird bevorzugt eine Steuerung angewendet. Sind bei bekannten Eigenschaften des technischen Systems beziehungsweise des technischen Prozesses mehrere dominierende Störgrößen wirksam und auch nur eine in Abhängigkeit von der Zeit nicht bestimmbar, muss eine Regelung angewendet werden. Der Vorteil einer Regelung im Vergleich zur Steuerung besteht darin, dass der Regeldifferenz unabhängig von ihrer Entstehungsursache entgegengewirkt wird.

Mit der Zunahme der Computertechnologie kommt es immer häufiger vor, dass einzelne Komponenten in einem technischen System beziehungsweise in einem technischen Prozess über eine oder mehrere Rechnereinheit(en) gesteuert beziehungsweise geregelt werden. Dabei ist es nicht unbedingt erforderlich, dass die Rechnereinheit(en) in direkter Umgebung der entsprechenden Komponenten angesiedelt ist. Um eine Steuerung beziehungsweise Regelung der Komponenten vornehmen zu können, kommuniziert die wenigstens eine Rechnereinheit üblicherweise mit den Komponenten, wobei in der Regel auch Daten ausgetauscht werden, was beispielsweise unidirektional (in einer Richtung) oder aber auch bidirektional (in zwei Richtungen) erfolgen kann.

Die Rechnereinheiten laufen dabei unter einer bestimmten Rechner-Betriebssystemumgebung. Ein Rechner-Betriebssystem stellt generell das Bindeglied zwischen der Hardware einer Rechnereinheit einerseits und dem Anwender beziehungsweise seinen Regel-/Steuerprogrammen andererseits dar. Ein Betriebssystem umfasst Programme, die zusammen mit den Eigenschaften der Rechnereinheit die Grundlage der möglichen Betriebsarten bilden und insbesondere die Abwicklung von Programmen steuern und überwachen.

Bei einem klassischen Betriebssystem, das zum Steuern und/oder Regeln von Komponenten in einem technischen System beziehungsweise einem technischen Prozess geeignet ist, handelt es sich um ein sogenanntes Echtzeit-Betriebssystem. Eine Rechnereinheit, auf der dieses Betriebssystem läuft, hat in der Regel eine oder mehrere Schnittstellen, bei denen es sich beispielsweise um serielle und/oder parallele Schnittstellen handeln kann. Der Einsatz solcher bekannter Betriebssysteme zum Steuern und/oder Regeln von Aggregaten in einem technischen System weist jedoch eine Reihe von Nachteilen auf. Bisher werden für das Steuern und Regeln von Komponenten oftmals Mikroprozessoren eingesetzt, auf welchen eine Software implementiert ist und läuft, die beispielsweise in Assembler oder einer höheren Programmiersprache (etwa C) geschrieben wurde. Die Signalverarbeitung der angeschlossenen Komponenten findet meist in unmittelbarer Nähe des Mikroprozessors statt. Nachteil dabei ist, dass oftmals viele einzelne Signale über eine weite Strecke zu dem Mikroprozessor geführt werden müssen. Zudem fehlt solchen Systemen meist eine geeignete Schnittstelle für die Fernwartung beziehungsweise den Fernzugriff. Weiterhin ist es bei den bekannten technischen Systemen in der Regel nicht möglich, die einzelnen Komponenten über ein sogenanntes BUS-System anzusteuern. Bei einem BUS-System handelt es sich generell um eine Verbindungsstruktur, die eine Kommunikation mehrerer Komponenten mit einer einzelnen Rechnereinheit ermöglichen. Weiterhin besteht für derartige technische Systeme in der Regel eine räumliche Begrenzung.

Der vorliegenden Erfindung liegt die Aufgabe zugrunde, ein Verfahren zum Steuern und/oder Regeln wenigstens einer Komponente in einem technischen System und/oder in einem technischen Prozess sowie ein technisches System bereitzustellen, mit dem die genannten Nachteile vermieden werden können. Insbesondere soll es ermöglicht werden, innerhalb eines technischen Systems beziehungsweise des technischen Prozesses, das/der eine ganze Anzahl von Komponenten aufweisen kann, deren Steuerung beziehungsweise Regelung möglichst schnell, effizient und dabei kostengünstig zu realisieren.

Diese Aufgabe wird erfindungsgemäß gelöst durch das Verfahren mit den Merkmalen gemäß dem unabhängigen Patentanspruch 1 sowie das technische System mit den Merkmalen gemäß dem unabhängigen Patentanspruch 10. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen technischen System, und umgekehrt.

Gemäß dem ersten Aspekt der Erfindung wird ein Verfahren zum Steuern und/oder Regeln wenigstens einer Komponente in einem technischen System und/oder in einem technischen Prozess bereitgestellt, das durch folgende Schritte gekennzeichnet ist:
a) in einer Rechner-Betriebsumgebung ist ein Steuerprogramm zum Steuern und/oder Regeln von zumindest einem Teil der wenigstens einen Komponente eingebunden;
b) das Steuerprogramm wirkt in der Rechner-Betriebssystemumgebung mit einem Emulationsprogramm zusammen, welches gegenüber dem Steuerprogramm eine Rechnerumgebung simuliert;
c) das Emulationsprogramm simuliert weiterhin eine Schnittstelle zu einem Bearbeitungsprogramm, welches elektronisch eine geeignete Verbindungsstelle zwischen dem Steuerprogramm und der wenigstens einen Komponente erzeugt:
d) über die Verbindungsschnittstelle findet zwischen dem Steuerprogramm und der wenigstens einen Komponente zum Zwecke des Steuerns und/oder Regelns unidirektional oder bidirektional ein Datenaustausch statt.

Gemäß dem vorliegenden Verfahren wird wenigstens ein Teil einer Komponente innerhalb eines technischen Systems beziehungsweise des technischen Prozesses gesteuert und/oder geregelt. Dabei ist die Erfindung nicht auf bestimmte Anwendungsarten beziehungsweise auf den Einsatz in bestimmten technischen Systemen beziehungsweise Prozessen beschränkt.

Generell kann das Verfahren zum Steuern und/oder Regeln von technischen Systemen beziehungsweise technischen Prozessen in der Verfahrenstechnik, der Luft- und Raumfahrttechnik, der industriellen Steuerungstechnik, der automobilen Steuer- und Regelungstechnik, der Energieversorgung, der Stoffverwertung, der Fördertechnik, der Halbleiterherstellung, des Maschinenbaus und dergleichen eingesetzt werden.

Zur Durchführung des Verfahrens ist zunächst vorgesehen, dass in einer Rechner-Betriebssystemumgebung ein Steuerprogramm zum Steuern und/oder Regeln von zumindest einem Teil der wenigstens einen Komponente eingebunden wird.

Dabei ist die Erfindung nicht auf bestimmte Typen von Rechner-Betriebsystemumgebungen beschränkt. Vorteilhaft kann es sich bei der Rechner-Betriebssystemumgebung um dein Multi-Tasking- und Multi-User-Betriebssystem zwischen Workstations und Server handeln, das aber auch für Personal Computer und dergleichen portierbar ist. Besonders vorteilhaft kann es sich bei der Rechner-Betriebssystemumgebung um das so genannte "UNIX"-Betriebssystem oder ein auf "LINUX" basiertes Betriebssystem handeln.

Das Steuerprogramm kann zunächst mit einem geeigneten Programm-Generierungs-Werkzeug erzeugt und anschließend in die Rechner-Betriebssystemumgebung eingebunden werden. Die Erzeugung des Steuerprogramms kann beispielsweise derart erfolgen, dass das Programm in einer abstrakten Programmiersprache erzeugt wird, in dem aus einem graphisch programmierten Programm automatisch ein C-Code erstellt wird, aus dem anschließend das Steuerprogramm erzeugt wird.

Das Steuerprogramm wirkt in der Rechner-Betriebssystemumgebung mit einem Emulationsprogramm zusammen, welches gegenüber dem Steuerprogramm eine Rechnerumgebung simuliert. Das bedeutet, dass das Emulationsprogramm dem Steuerprogramm suggeriert, es sei in einer Rechnerumgebung installiert und laufe auf dieser ab.

Weiterhin simuliert das Emulationsprogramm auch eine Schnittstelle zu einem weiteren Bearbeitungsprogramm, welches elektronisch eine geeignete Verbindungsschnittstelle zwischen dem Steuerprogramm und der wenigstens einen Komponente erzeugt. Das Bearbeitungsprogramm ist ebenfalls in die Rechner-Betriebssystemumgebung eingebunden und dient generell zur Datenumwandlung, zur Datenbearbeitung und dergleichen. Das Bearbeitungsprogramm hat insbesondere die Aufgabe, zu der durch das Emulationsprogramm simulierten Schnittstelle eine Verbindungsschnittstelle zu erzeugen, über die die zu steuernden beziehungsweise zu regelnden Komponenten vorteilhaft an das Steuerprogramm angebunden werden können.

Sobald dies geschehen ist, findet über die Verbindungsschnittstelle zwischen dem Steuerprogramm und der wenigstens einen Komponente zum Zwecke des Steuerns und/oder Regelns zumindest zeitweilig unidirektional oder bidirektional ein Datenaustausch statt.

Mit Hilfe des erfindungsgemäßen Verfahrens lassen sich besonders einfach einzelne Komponenten eines technischen Systems beziehungsweise eines technischen Prozesses steuern beziehungsweise regeln. Es ist möglich, an die Verbindungsschnittstelle auch BUS-Systeme anzuschließen, sodass über ein einziges Steuerprogramm, das beispielsweise auf einer einzelnen Rechnereinheit abgelegt sein kann, auf eine ganze Anzahl von Komponenten zugegriffen werden kann. Weiterhin ist es mit dem erfindungsgemäßen Verfahren möglich, dass sich die einzelnen Komponenten in einem großen Abstand zu dem Steuerprogramm befinden können. Das bedeutet, dass das Steuerprogramm beispielsweise auf einer zentralen Rechnereinheit implementiert sein kann, während sich die einzelnen Komponenten an den unterschiedlichsten Orten befinden können.

Dabei kann insbesondere vorgesehen sein, dass eine Rechnereinheit, auf der die Rechner-Betriebssystemumgebung implementiert ist und auf dem die einzelnen Programme abgelegt sind, als eine sogenannte "Standalone-Lösung" ausgebildet ist. Durch das erfindungsgemäße Verfahren ist es jederzeit möglich, dass das Steuerprogramm bequem mit der Verbindungsschnittstelle und über diese mit den Komponenten kommunizieren kann. Dazu kommuniziert das Steuerprogramm über das Bearbeitungsprogramm und die Verbindungsschnittstelle mit den zu steuernden beziehungsweise regelnden Komponenten, die an der Verbindungsschnittstelle angeschlossen sind.

Beispielsweise kann vorgesehen sein, dass es sich bei dem Emulationsprogramm und dem Steuerprogramm um separate Programme handelt, die auf unterschiedlichen Datenträgern abgelegt sind und die über geeignete Schnittstellen miteinander kommunizieren. Vorteilhaft ist jedoch vorgesehen, dass das Steuerprogramm innerhalb des Emulationsprogramms eingebunden wird oder ist, was bedeutet, dass das Steuerprogramm in einem solchen Fall im Emulationsprogramm abläuft.

Die vorliegende Erfindung ist nicht auf bestimmte Ausgestaltungsformen für die Verbindungsschnittstelle beschränkt. Beispielsweise kann von dem Bearbeitungsprogramm eine Verbindungsschnittstelle in Form einer USB-Schnittstelle (Universal-Serial-BUS), einer LAN-Schnittstelle (Local Area Network) oder eines CAN-BUS (Control Area Network) erzeugt werden. Natürlich sind auch andere Verbindungsschnittstellentypen denkbar und möglich.

In vorteilhafter Ausgestaltung kann das Emulationsprogramm gegenüber dem Steuerprogramm eine Rechnerumgebung mit Prozessor und Speicher simulieren. Dem Steuerprogramm wird auf diese Weise über das Emulationsprogramm suggeriert, es laufe auf einer üblichen Rechnerumgebung ab, die jedoch lediglich in Form von Software existiert. Dazu ist besonders vorteilhaft vorgesehen, dass das Emulationsprogramm eine Schnittstelle in Form einer seriellen Schnittstelle oder einer LAN-Schnittstelle zum Bearbeitungsprogramm simuliert.

In weiterer Ausgestaltung können in der wenigstens einen Komponente vorteilhaft direkt oder indirekt für den Betrieb des technischen Systems beziehungsweise des technischen Prozesses erforderliche Daten erzeugt werden, die an das Steuerprogramm übertragen und dort bearbeitet oder verwertet werden. In einem solchen Fall findet ein bidirektionaler Datenaustausch zwischen dem Steuerprogramm und den einzelnen Komponenten statt. Die von den Komponenten an das Steuerprogramm rückübertragenen Daten können beispielsweise dazu verwendet werden, die Steuerroutinen beziehungsweise Regelroutinen für die einzelnen Komponenten zu bearbeiten und gegebenenfalls zu verändern. In weiterer Ausgestaltung kann dazu vorgesehen sein, dass in der wenigstens einen Komponente über wenigstens ein Sensorelement direkt oder direkt erzeugte Messwerte generiert und an das Steuerprogramm übertragen werden.

Vorteilhafterweise kann weiterhin vorgesehen sein, dass ein Diagnoseprogramm vorgesehen ist, welches unter der Rechner-Betriebssystemumgebung läuft und welches mit dem Steuerprogramm und/oder dem Emulationsprogramm und/oder dem Bearbeitungsprogramm zusammenwirkt, wobei über das Diagnoseprogramm insbesondere das Steuerprogramm und/oder das Emulationsprogramm und/oder das Bearbeitungsprogramm modifiziert wird.

Das Diagnoseprogramm hat insbesondere die Aufgabe, die mit ihm verbundenen Programme zu überwachen und bei Bedarf zu modifizieren beziehungsweise zu verändern. So kann mittels des Diagnoseprogramms, das vorteilhaft unter der gleichen Rechner-Betriebssystemumgebung wie die anderen Programme läuft, dass mit diesem verbundene Programm bearbeitet, modifiziert und im Extremfall sogar ausgetauscht werden.

Wie im weiteren Verlauf der Beschreibung noch näher erläutert wird, muss das Diagnoseprogramm nicht zwangsläufig auf der gleichen Rechnerumgebung wie die übrigen Programme installiert sein. Ein solches Diagnoseprogramm kann geeigneter Weise für eine Fernabfrage, Fernsteuerung oder dergleichen der einzelnen Programme beziehungsweise der einzelnen Komponenten eingesetzt werden. In einem solchen Fall könnte beispielsweise vorgesehen sein, dass ein einzelnes Diagnoseprogramm für mehrere, voneinander unabhängige technische Systeme beziehungsweise Prozesse eingesetzt wird. Dieses Diagnoseprogramm kann dann über geeignete Verbindungsmöglichkeiten, die im weiteren Verlauf der Beschreibung noch näher erläutert werden, je nach Bedarf auf die einzelnen technischen Systeme beziehungsweise Prozesse, beziehungsweise auf die in den einzelnen technischen Systemen beziehungsweise Prozessen ablaufenden Programme, einwirken. Dies wird im Zusammenhang mit dem nachfolgend beschriebenen erfindungsgemäßen technischen System noch näher erläutert.

Die mit Hilfe des erfindungsgemäßen Verfahrens erzielbaren Vorteile lassen sich insbesondere wie folgt zusammenfassen:

Unter Verwendung eines Emulationsprogramms wird auf einer ersten Hardwareumgebung eine zweite Hardwareumgebung simuliert. In der simulierten Hardwareumgebung läuft das Steuerprogramm. Die beiden Hardwareumgebung können von einem identischen Hardwaretypus sein, wobei dies nicht zwingend erforderlich ist.

Die Datenerfassung und Datenausgabe wird dezentral von der ersten Hardwareumgebung realisiert und dann vorzugsweise über einen BUS von und zur eigentlichen Datenerfassungs-Hardwareumgebung geschickt (hin und zurück). Dazu wird besonders vorteilhaft ein kostengünstiger USB-BUS eingesetzt. Alternativ kann vorteilhaft auch eine drahtlose Kommunikation vorgesehen werden, beispielsweise WLAN, Bluetooth und dergleichen.

Durch die auf dem Betriebssystem, insbesondere auf "LINUX" basierende Software auf der ersten Hardwareumgebung besteht die Möglichkeit, auf verschiedenste Art und Weise mit der "Außenwelt" zu kommunizieren. Für diese Art der Kommunikation bietet sich vorteilhaft eine auf TCP/IP-basierte Lösung an.

Vorteilhaft kann das Verfahren zum Steuern und/oder Regeln wenigstens einer Komponente in einem als Brennstoffzellensystem ausgebildeten technischen System eingesetzt werden, wobei die Erfindung selbstverständlich nicht auf dieses konkrete Beispiel beschränkt ist.

Brennstoffzellensysteme sind bereits seit langem bekannt und haben in den letzten Jahren erheblich an Bedeutung gewonnen. Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden.

Bei einer Brennstoffzelle werden die zwischen elektrisch neutralen Molekülen oder Atomen ablaufenden Oxidations- und Reduktionsprozesse in der Regel über einen Elektrolyten räumlich getrennt. Eine Brennstoffzelle besteht grundsätzlich aus einem Anodenteil, an den ein Brennstoff zugeführt wird. Weiterhin weist die Brennstoffzelle einen Kathodenteil auf, an dem ein Oxidationsmittel zugeführt wird. Räumlich getrennt sind der Anoden- und Kathodenteil durch den Elektrolyten. Bei einem derartigen Elektrolyten kann es sich beispielsweise um eine Membran handeln. Solche Membranen haben die Fähigkeit, Ionen durchzuleiten, Gase jedoch zurückzuhalten. Die bei der Oxidation abgegebenen Elektronen lassen sich als elektrischer Strom durch einen Verbraucher leiten.

Als gasförmige Reaktionspartner für die Brennstoffzelle können beispielsweise Wasserstoff als Brennstoff und Sauerstoff als Oxidationsmittel verwendet werden. Will man die Brennstoffzelle mit einem leicht verfügbaren oder leichter zu speichernden Brennstoff, wie etwa Erdgas, Methanol, Benzin, Diesel oder anderen Kohlenwasserstoffen betreiben, muss man den Kohlenwasserstoff in einer Vorrichtung zum Erzeugen/ Aufbereiten eines Brennstoffs in einem sogenannten Reformierungsprozess zunächst in ein wasserstoffreiches Gas umwandeln.

Ein Brennstoffzellensystem besteht in der Regel aus mehreren Brennstoffzellen, die beispielsweise wiederum aus einzelnen Schichten gebildet sein können. Die Brennstoffzellen sind vorzugsweise hintereinander angeordnet, beispielsweise sandwichartig übereinander gestapelt. Ein derart ausgebildetes Brennstoffzellensystem wird dann als Brennstoffzellenstapel beziehungsweise Brennstoffzellenstack bezeichnet.

Ein Brennstoffzellensystem kann somit vorteilhaft über mehrere Brennstoffzellenstacks verfügen, wobei es sich bei dem Brennstoffzellensystem dann um das technische System und die einzelnen Brennstoffzellenstacks beziehungsweise Teile davon um die Komponenten handelt. Ein solches Brennstoffzellensystem kann besonders vorteilhaft mit dem erfindungsgemäßen Verfahren geregelt beziehungsweise gesteuert werden.

Gemäß einem weiteren Aspekt der vorliegenden Erfindung wird ein technisches System bereitgestellt, mit wenigstens einer Komponente und mit wenigstens einer Rechnereinheit, auf welcher Mittel zur Durchführung des wie vorstehend beschriebenen erfindungsgemäßen Verfahrens implementiert sind. In einem solchen technischen System lassen sich die einzelnen Komponenten besonders einfach und elegant steuern, beziehungsweise regeln.

Wie weiter oben bereits ausgeführt wurde, kann das Steuerprogramm dabei besonders vorteilhaft als Bestandteil des Emulationsprogramms ausgebildet sein.

Vorteilhaft kann wenigstens ein Sensorelement zum Erfassen von Betriebsparametern des technischen Systems vorgesehen sein, welche dann von den einzelnen Komponenten zum Steuerprogramm übertragen werden.

In weiterer Ausgestaltung kann auch vorgesehen sein, dass ein Diagnoseprogramm existiert, das unter der gleichen Rechner-Betriebssystemumgebung wie die anderen Programme läuft und das mit dem Steuerprogramm und/oder dem Emulationsprogramm und/oder dem Bearbeitungsprogramm zusammenwirkt. Dabei kann beispielsweise vorgesehen sein, dass das Diagnoseprogramm und die übrigen Programme wie das Steuerprogramm, das Emulationsprogramm, das Bearbeitungsprogramm und das Diagnoseprogramm auf einer einzigen Rechnereinheit implementiert sind.

Alternativ ist auch möglich, dass das Diagnoseprogramm auf einer separaten Rechnereinheit implementiert ist. In einem solchen Fall können das Steuerprogramm, das Emulationsprogramm und das Bearbeitungsprogramm auf einer ersten Rechnereinheit implementiert sein, während das Diagnoseprogramm auf einer zweiten, separaten Rechnereinheit implementiert ist. In einem solchen Fall weist die erste Rechnereinheit vorteilhaft eine Schnittstelle für das Diagnoseprogramm auf.

Sofern die letztgenannte Alternative realisiert ist, gibt es in der Rechner-Betriebssystemumgebung neben einem "Steuerungszweig", über den die wenigstens eine Komponente von dem Steuerprogramm gesteuert wird, vorzugsweise noch einen anderen Zweig, der beispielsweise über TCP-IP nach extern, beispielsweise über das Internet oder ein Intranet, kommuniziert. In einem solchen Fall kann in der ersten Rechnereinheit ein Web-Server implementiert werden, über den eine Schnittstelle zu dem auf der zweiten, separaten implementierten Diagnoseprogramm realisiert wird. Auf diese Weise wird es möglich, dass das Diagnoseprogramm auf der zweiten Rechnereinheit - beispielsweise über das Internet - mit den Programmen auf der ersten Rechnereinheit kommunizieren und gegebenenfalls interagieren kann. Auf diese Weise wird es besonders einfach möglich, beispielsweise eine Fernabfrage, eine Fernsteuerung oder dergleichen der Programme auf der ersten Rechnereinheit mittels des Diagnoseprogramms auf der zweiten Rechnereinheit zu ermöglichen.

Zu diesem Zwecke können die Rechnereinheiten zumindest zeitweilig über eine Leitung, eine drahtlose Verbindung oder dergleichen miteinander verbunden sein. Eine drahtlose Verbindung eignet sich insbesondere dann, wenn die Kommunikation zwischen den einzelnen Programmen über das Internet erfolgen soll.

Wenn es sich bei dem technischen System um ein Brennstoffzellensystem handelt, kann die wenigstens eine Komponente beispielsweise als Brennstoffzelle, als Teil einer Brennstoffzelle oder aber auch als Brennstoffzellenstack ausgebildet sein. In einem solchen Fall können über das Steuerprogramm und das wie weiter oben beschriebene erfindungsgemäße Verfahren vorzugsweise die einzelnen Komponenten der Brennstoffzelle beziehungsweise des Brennstoffzellenstacks gesteuert beziehungsweise geregelt werden. Dabei kann es sich beispielsweise um entsprechende Lüfter, um eine Kühlung, um ausgewählte Sensoren, Ventile und dergleichen handeln. Besonders vorteilhaft kann es sich bei einer Komponente um eine Platine innerhalb oder an einer Brennstoffzelle oder eines Brennstoffzellenstacks handeln, wobei über die Platine die einzelnen Komponenten der Brennstoffzelle beziehungsweise des Brennstoffzellenstacks gesteuert beziehungsweise geregelt werden können.

Vorteilhaft kann die Verbindungsschnittstelle über eine geeignete Verbindungseinrichtung mit der wenigstens einen Komponente verbunden sein. Dabei ist die Erfindung nicht auf bestimmte Verbindungseinrichtungen beschränkt. Besonders vorteilhaft kann die Verbindungseinrichtung jedoch als BUS-System, insbesondere als ein USB-BUS, ausgebildet sein. In einer solchen Ausgestaltung können auf einfache Weise eine ganze Reihe von Komponenten mit der Verbindungsschnittstelle verbunden sein und über diese auf besonders einfache Weise mit dem Steuerprogramm in Verbindung treten.

In weiterer Ausgestaltung kann das Steuerprogramm - insbesondere, jedoch nicht zwingend notwendig, über die Verbindungsschnittstelle - weiterhin über eine Sicherheitseinrichtung, insbesondere eine Sicherheitsleitung, mit der wenigstens einen Komponente verbunden sein. Dazu ist beispielsweise eine durchgehende Leitung vorgesehen, auf welche jede Sicherheitsfunktion (z.B. Notabschaltung bei Überschreiten sicherheitsrelevanter Parameter - etwa einer Temperatur oder dergleichen) einer Komponente Zugriff hat. Erkennt jetzt eine solche Sicherheitsschaltung einen Fehler, so gibt diese ein Signal auf diese Leitung. Auf dieses gemeinsame Signal hin wird dann beispielsweise eine Notabschaltung eingeleitet.

Die vorliegende Erfindung wird nun anhand von Ausführungsbeispielen unter Bezugnahme auf die beiliegenden Zeichnungen erläutert. Es zeigen:
- Figur 1: zwei Rechnereinheiten, auf denen die Elemente zur Durchführung des erfindungsgemäßen Verfahrens implementiert sind; und
- Figur 2: ein Ausführungsbeispiel eines technischen Systems gemäß der vorliegenden Erfindung.

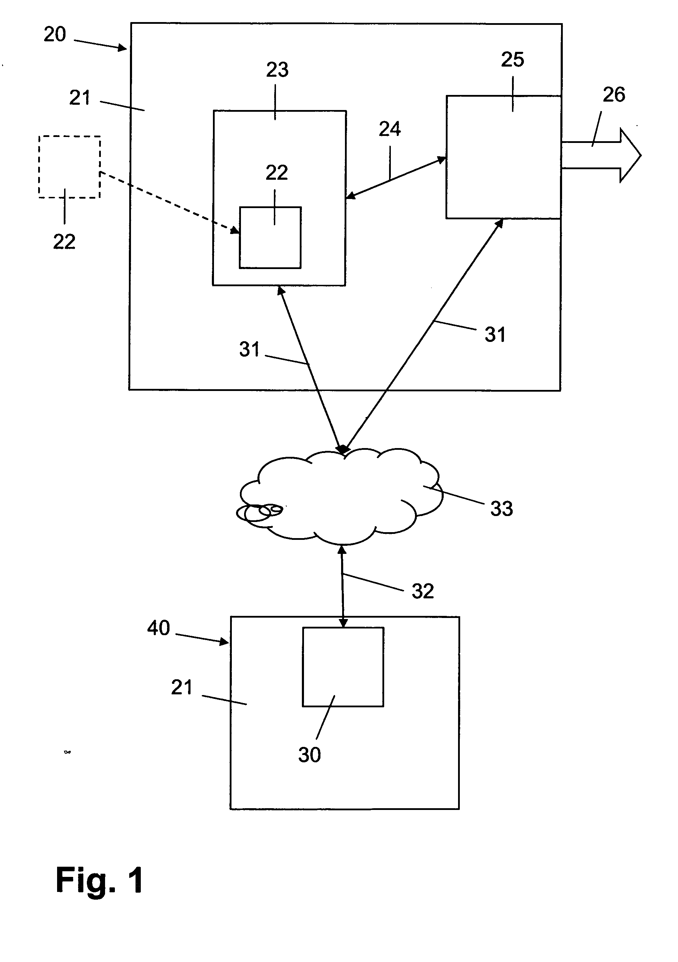

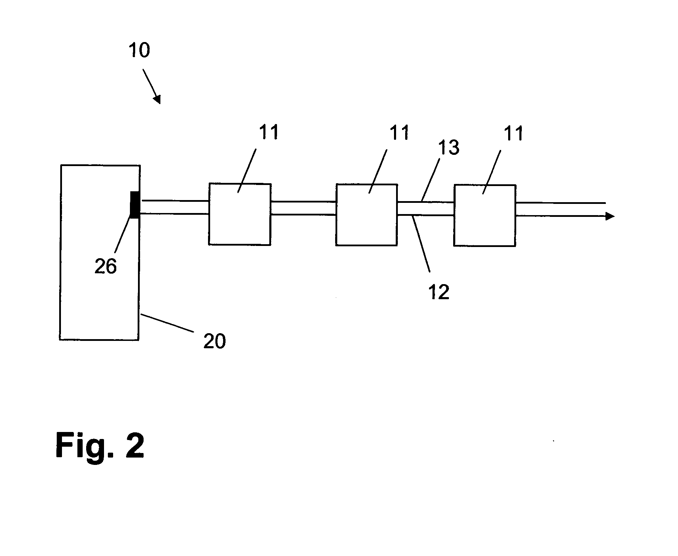

In Figur 2 ist ein - beispielsweise als Brennstoffzellensystem ausgebildetes - technisches System 10 dargestellt, welches eine Anzahl von Komponenten 11 aufweist, die im vorliegenden Beispiel als Brennstoffzellenstacks ausgebildet sein können. Jeder Brennstoffzellenstack verfügt über eine Platine, mittels derer er mit einer Verbindungseinrichtung 12 verbunden ist. Bei der Verbindungseinrichtung 12 handelt es sich im vorliegenden Beispiel um einen sogenannten USB-BUS. Über die Verbindungseinrichtung 12 sind die einzelnen Komponenten 11 mit einer ersten Rechnereinheit 20 verbunden. Diese Verbindung ist über eine geeignete Verbindungsschnittstelle 26 realisiert. Über die Rechnereinheit 20 sollen die einzelnen Komponenten 11 des technischen Systems 10 geregelt beziehungsweise gesteuert werden. Wie dies im einzelnen geschehen kann, ist in Figur 1 dargestellt.

Das technische System 10 verfügt weiterhin über eine Sicherheitseinrichtung in Form einer Sicherheitsleitung 13, über die die einzelnen Komponenten 11 zumindest zeitweilig mit der Rechnereinheit 20 verbunden sind. Die Verbindung der Sicherheitsleitung 12 mit der Rechnereinheit 20 kann über die Verbindungsschnittstelle 26 erfolgen, was jedoch nicht zwingend erforderlich ist. Sicherheitsrelevante Funktionen (z.B. Notabschaltung bei Überschreiten einer Temperatur etc.) werden in der Regel nicht über Software realisiert, sondern in der Hardware abgebildet. Im vorliegenden Beispiel existiert dazu die eine durchgehende Leitung 12 (eine Leitung von jeder Komponente 11, etwa von jeder Platine auf die Nächste, parallel zur Leitung 12), auf welche jede in Hardware abgebildete Sicherheitsfunktion Zugriff hat. Erkennt jetzt eine solche Sicherheitsschaltung einen Fehler, so gibt diese ein Signal auf diese Leitung 13. Auf dieses gemeinsame Signal hin wird dann beispielsweise eine Notabschaltung eingeleitet. Das heißt, egal welche Komponente 11 das Signal auslöst, es gehen alle anderen Komponenten 11 ebenfalls in einen sicheren Zustand.

Das Besondere an dieser Sicherheitsleitung 13 ist zudem, dass beispielsweise auch ein Leitungsbruch erkannt werden kann, und die Rechnereinheit 20 ebenfalls an diese Leitung 13 angeschlossen werden kann, um entweder selbst ein Not-Aus auszulösen, oder im Falle eines erfolgten Not-Aus dies mitzubekommen.

Grundlage eines jeden Regel- beziehungsweise Steuervorgangs der Komponenten 11 bildet ein Steuerprogramm 22, das zunächst mit einem geeigneten Steuerprogramm-Generierungs-Werkzeug erzeugt wird. Dies ist durch den gestrichelten Kasten in Figur 1 dargestellt. Nachdem das Steuerprogramm 22 erzeugt worden ist, wird dieses auf der ersten Rechnereinheit 20 implementiert. Die Rechnereinheit 20 läuft unter einer Rechner-Betriebssystemumgebung 21, bei der es sich vorteilhaft um das sogenannte "Linux-Betriebssystem" handelt. Unter dieser Rechner-Betriebssystemumgebung 21 wird das Steuerprogramm 22 eingebunden. Im vorliegenden Beispiel wird das Steuerprogramm 22 dazu in einem Emulationsprogramm 23 eingebunden, welches dem Steuerprogramm 22 eine Rechnerumgebung mit Prozessor und Speicher simuliert. Das Steuerprogramm 22 läuft im Beispiel im Emulationsprogramm 23.

Das Emulationsprogramm 23 simuliert weiterhin eine Schnittstelle 24, bei der es sich vorteilhaft um eine serielle Schnittstelle, eine LAN-Schnittstelle oder dergleichen handeln kann. Dabei handelt es sich um eine Schnittstelle zu einem Bearbeitungsprogramm 25, bei dem es sich um ein Programm zur Datenumwandlung beziehungsweise Datenbearbeitung handelt, und über welches zu der seriellen Schnittstelle 24 eine Verbindungsschnittstelle 26 zwischen dem Steuerprogramm 22 und der wenigstens einen Komponente 11 (siehe Figur 2) erzeugt wird.

Das Steuerprogramm 22 kommuniziert somit über die vom Emulationsprogramm 23 simulierte Schnittstelle 24 und das Bearbeitungsprogramm 25 über die Verbindungsschnittstelle 26 mit den Komponenten 11, die über die Verbindungseinrichtung 12 (Figur 2) an der Schnittstelle 26 angeschlossen sind.

Über die Verbindungsschnittstelle 26 findet somit zwischen dem Steuerprogramm 22 und den Komponenten 11 zum Zwecke des Steuerns und/oder Regelns ein Datenaustausch statt, der je nach Anwendungsfall unidirektional oder bidirektional sein kann. Im letztgenannten Fall können aus den Komponeten 11 Messwerte zu dem Steuerprogramm 22 im Emulationsprogramm 23 geschickt und dort weiterverarbeitet werden.

Schließlich ist die Rechnereinheit 20 beziehungsweise sind die in der Rechner-Betriebssystemumgebung 21 eingebundenen Programme 22, 23, 25 über geeignete Schnittstellen 31 mit einem Diagnoseprogramm 30 verbunden, welches auf einer zur Rechnereinheit 20 separaten Rechnereinheit 40 implementiert ist. Die Rechnereinheit 40 soll dabei über die gleiche Rechner-Betriebssystemumgebung 21 wie die Rechnereinheit 20 verfügen, wobei das Diagnoseprogramm 30 in dieser Rechner-Betriebssystemumgebung eingebunden ist. Über das Diagnoseprogramm 30 soll es mittels einer Fernabfrage, Fernsteuerung oder dergleichen möglich sein, auf die in der Rechnereinheit 20 eingebundenen Programme 22, 23, 25 einzuwirken. Insbesondere soll es mit dem Diagnoseprogramm 30 möglich werden, das Steuerprogramm 22 im Emulationsprogramm 23 zu bearbeiten, beispielsweise zu modifizieren beziehungsweise im Extremfall auch auszutauschen.

Dazu sind die beiden Rechnereinheiten 20, 40 mittels einer drahtlosen Verbindung 32, im vorliegenden Fall über das Internet 33, zumindest zeitweilig miteinander verbunden beziehungsweise verbindbar. Über die drahtlose Verbindung 31 und die entsprechenden Schnittstellen 31 kann das Diagnoseprogramm 30 nun mit den Programmen 22, 23, 25 in der ersten Rechnereinheit 20 kommunizieren.

Eine solche Ausgestaltung hat den Vorteil, dass einzelne, räumlich voneinander getrennte technische Systeme 10 über ein einziges zentrales Diagnoseprogramm, das beispielsweise in einer zentralen Rechnereinheit implementiert sein kann, angesprochen und gegebenenfalls zu bearbeitet beziehungsweise modifiziert werden können. Dies lässt eine besonders einfache und dennoch wirkungsvolle Überwachung auch von solchen technischen Systemen 10 zu, die sich räumlich weit voneinander entfernt befinden.

### Bezugszeichenliste

- 10: Technisches System (Brennstoffzellensystem)
- 11: Komponente des technischen Systems
- 12: Verbindungseinrichtung (USB-BUS)
- 13: Sicherheitseinrichtung (Sicherheitsleitung)

- 20: Erste Rechnereinheit
- 21: Rechner-Betriebssystemumgebung
- 22: Steuerprogramm
- 23: Emulationsprogramm
- 24: Schnittstelle
- 25: Bearbeitungsprogramm
- 26: Verbindungsschnittstelle

- 30: Diagnoseprogramm
- 31: Schnittstelle
- 32: Drahtlose Verbindung
- 33: Internet

- 40: Zweite Rechnereinheit

## Patentansprüche

1. Verfahren zum Steuern und/oder Regeln wenigstens einer Komponente (11) in einem technischen System (10) und/oder in einem technischen Prozess, **gekennzeichnet durch** folgende Schritte:
a) in einer Rechner-Betriebssystemumgebung (21) ist ein Steuerprogramm (22) zum Steuern und/oder Regeln von zumindest einem Teil der wenigstens einen Komponente (11) eingebunden;
b) das Steuerprogramm (22) wirkt in der Rechner-Betriebssystemumgebung (21) mit einem Emulationsprogramm (23) zusammen, welches gegenüber dem Steuerprogramm (22) eine Rechnerumgebung simuliert;
c) das Emulationsprogramm (23) simuliert weiterhin eine Schnittstelle (24) zu einem Bearbeitungsprogramm (25), welches elektronisch eine geeignete Verbindungsschnittstelle (26) zwischen dem Steuerprogramm (22) und der wenigstens einen Komponente (11) erzeugt;
d) über die Verbindungsschnittstelle (26) findet zwischen dem Steuerprogramm (22) und der wenigstens einen Komponente (11) zum Zwecke des Steuerns und/oder Regelns unidirektional oder bidirektional ein Datenaustausch statt.

2. Verfahren nach Anspruch 1, **dadurch gekennzeichnet, dass** das Steuerprogramm (22) innerhalb des Emulationsprogramms (23) eingebunden ist oder wird.

3. Verfahren nach Anspruch 1 oder 2, **dadurch gekennzeichnet**, das von dem Bearbeitungsprogramm (25) eine Verbindungsschnittstelle (26) in Form einer USB-Schnittstelle, einer LAN-Schnittstelle oder eines CAN-BUS erzeugt wird.

4. Verfahren nach einem der Ansprüche 1 bis 3, **dadurch gekennzeichnet, dass** das Emulationsprogramm (23) gegenüber dem Steuerprogramm (22) eine Rechnerumgebung mit Prozessor und Speicher simuliert.

5. Verfahren nach einem der Ansprüche 1 bis 4, **dadurch gekennzeichnet, dass** das Emulationsprogramm (23) eine serielle Schnittstelle (24) oder eine LAN-Schnittstelle zum Bearbeitungsprogramm (25) simuliert.

6. Verfahren nach einem der Ansprüche 1 bis 5, **dadurch gekennzeichnet, dass** in der wenigstens einen Komponente (11) direkt oder indirekt für den Betrieb des technischen Systems (10) und/oder des technischen Prozesses erforderliche Daten erzeugt werden, die an das Steuerprogramm (22) übertragen und dort bearbeitet oder verwertet werden.

7. Verfahren nach Anspruch 6, **dadurch gekennzeichnet, dass** in der wenigstens einen Komponente (11) über wenigstens ein Sensorelement direkt oder indirekt erzeugte Meßwerte generiert und an das Steuerprogramm (22) übertragen werden.

8. Verfahren nach einem der Ansprüche 1 bis 7, **dadurch gekennzeichnet**, das ein Diagnoseprogramm (30) vorgesehen ist, das unter der Rechner-Betriebssystemumgebung (21) läuft und das mit dem Steuerprogramm (22) und/oder dem Emulationsprogramm (23) und/oder dem Bearbeitungsprogramm (25) zusammenwirkt, wobei über das Diagnoseprogramm (30) insbesondere das Steuerprogramm (22) und/oder das Emulationsprogramm (23) und/oder das Bearbeitungsprogramm (25) modifiziert wird.

9. Verfahren nach einem der Ansprüche 1 bis 8 zum Steuern und/oder Regeln wenigstens einer Komponente in einem Brennstoffzellensystem.

10. Technisches System (10), mit wenigstens einer Komponente (11) und mit wenigstens einer Rechnereinheit (20, 40), auf der Mittel zur Durchführung des Verfahrens nach einem der Ansprüche 1 bis 9 implementiert sind.

11. Technisches System nach Anspruch 10, **dadurch gekennzeichnet, dass** das Steuerprogramm (22) als Bestandteil des Emulationsprogramms (23) ausgebildet ist.

12. Technisches System nach Anspruch 10 oder 11, **dadurch gekennzeichnet, dass** wenigstens ein Sensorelement zum Erfassen von Betriebsparametern des technischen Systems (10) vorgesehen ist.

13. Technisches System nach einem der Ansprüche 10 bis 12, **dadurch gekennzeichnet, dass** ein Diagnoseprogramm (30) vorgesehen ist, das unter der Rechner-Betriebssystemumgebung (21) läuft und das mit dem Steuerprogramm (22) und/oder dem Emulationsprogramm (23) und/oder dem Berabeitungsprogramm (25) zusammenwirkt.

14. Technisches System nach einem der Ansprüche 10 bis 13, **dadurch gekennzeichnet, dass** die Rechnereinheit (20) eine Schnittstelle (31) für das Diagnoseprogramm (30) aufweist und dass das Diagnoseprogramm (30) auf einer separaten Rechnereinheit (40) implementiert ist.

15. Technisches System nach Anspruch 14, **dadurch gekennzeichnet, dass** die Rechnereinheiten (20, 40) zumindest zeitweilig über eine Leitung oder eine drahtlose Verbindung (32) miteinander verbunden sind.

16. Technisches System nach einem der Ansprüche 10 bis 15, **dadurch gekennzeichnet, dass** dieses als Brennstoffzellensystem ausgebildet ist und dass die wenigstens eine Komponente (11) als Brennstoffzelle oder als Teil einer Brennstoffzelle oder als Brennstoffzellenstack ausgebildet ist.

17. Technisches System nach Anspruch 16, **dadurch gekennzeichnet, dass** die Komponente (11) als Platine innerhalb oder an einer Brennstoffzelle oder eines Brennstoffzellenstacks ausgebildet ist.

18. Technisches System nach einem der Ansprüche 10 bis 17, **dadurch gekennzeichnet, dass** die Verbindungsschnittstelle (26) über eine Verbindungseinrichtung (12) mit der wenigstens einen Komponente (11) verbunden ist.

19. Technisches System nach Anspruch 18, **dadurch gekennzeichnet, dass** die Verbindungseinrichtung (12) als Bussystem, insbesondere als ein USB-BUS, ausgebildet ist.

20. Technisches System nach einem der Ansprüche 10 bis 19, **dadurch gekennzeichnet, dass** das Steuerprogramm (22), das Emulationsprogramm (23), das Bearbeitungsprogramm (25) und das Diagnoseprogramm (30) auf einer einzigen Rechnereinheit (20) implementiert sind.

21. Technisches System nach einem der Ansprüche 14 bis 20, **dadurch gekennzeichnet, dass** das Steuerprogramm (22), das Emulationsprogramm (23) und das Bearbeitungsprogramm (25) auf einer ersten Rechnereinheit (20) implementiert sind, dass die erste Rechnereinheit (20) eine Schnittstelle (31) für das Diagnoseprogramm (30) aufweist und dass das Diagnoseprogramm (30) auf einer zweiten, separaten Rechnereinheit (40) implementiert ist.

22. Technisches System nach einem der Ansprüche 10 bis 21, **dadurch gekennzeichnet, dass** das Steuerprogramm (22), insbesondere über die Verbindungsschnittstelle (26), über eine Sicherheitseinrichtung, insbesondere eine Sicherheitsleitung (13), mit der wenigstens einen Komponente (11) verbunden ist.
